# FASCICULE DE BREVET EUROPEEN

(11) **EP 3 276 774 B1**
(45) Date de publication et mention de la délivrance du brevet: **26.06.2019**
(21) Numéro de dépôt: 17182287.7
(22) Date de dépôt: 20.07.2017
(51) Int. Cl.: H02J 4/00, B64D 35/08, H02J 5/00, H02J 3/32, H02J 3/38

(54) **ARCHITECTURE ÉLECTRIQUE A DOUBLÉ RÉSEAU ÉLECTRIQUE SECONDAIRE POUR LE DÉMARRAGE DES MOTEURS D'UN AÉRONEF**
ELEKTRISCHE SCHALTUNGSARCHITEKTUR MIT DOPPELTEM SEKUNDÄR-STROMKREIS ZUM ANLASSEN DER MOTOREN EINES LUFTFAHRZEUGS
AN ELECTRICAL ARCHITECTURE WITH PAIRED SECONDARY ELECTRICAL NETWORKS FOR STARTING ENGINES OF AN AIRCRAFT

(30) Priorité: 29.07.2016 FR 1601172
(43) Date de publication de la demande: 31.01.2018
(73) Titulaire: Airbus Helicopters, 13725 Marignane Cedex (FR)
(72) Inventeur: MARIOTTO, Damien, 13410 LAMBESC (FR); JAMOT, Michel, 13100 AIX EN PROVENCE (FR); LOGEAIS, Jean-François, 13009 MARSEILLE (FR)
(74) Mandataire: GPI & Associés

(56) Documents cités:
- EP-A1- 1 130 737
- EP-A2- 2 740 191
- FR-A1- 2 901 431
- FR-A1- 2 906 787
- FR-A1- 2 962 407
- FR-A1- 3 000 468
- US-A1- 2010 193 630
- US-A1- 2012 025 032
- US-A1- 2015 130 186

## Description

La présente invention se situe dans le domaine technique des systèmes de distribution et de génération de courants électriques. La présente invention se situe plus particulièrement dans le domaine technique des architectures électriques des aéronefs.

L'invention concerne une architecture électrique pour aéronef comportant deux réseaux électriques secondaires destinés respectivement au démarrage de l'installation motrice de l'aéronef et à l'alimentation électrique des équipements électriques de bord de l'aéronef. Cette architecture électrique est particulièrement destinée aux aéronefs à voilures tournantes.

L'invention concerne également un procédé de gestion d'une telle architecture électrique lors du démarrage de l'installation motrice de l'aéronef.

Une installation motrice pour un aéronef à voilure tournante comporte généralement une boîte de transmission principale de puissance mécanique, au moins un moteur thermique principal apte à mettre en mouvement cette boîte de transmission principale de puissance mécanique et au moins un démarreur électrique permettant la mise en route d'un moteur thermique principal. L'installation motrice peut comporter un démarreur pour chaque moteur thermique principal.

La boîte de transmission principale de puissance mécanique permet, pour un aéronef à voilure tournante, d'entraîner en rotation, via un arbre de sortie, au moins un rotor principal de l'aéronef à voilure tournante et éventuellement un rotor anticouple. Dans ce but, chaque moteur thermique principal est généralement de puissance élevée, par exemple de l'ordre de 2500 chevaux vapeurs (2500 ch), à savoir environ 1850 kiloWatts (1850 kW).

Un démarreur est relié mécaniquement à un moteur thermique principal et est généralement constitué par une machine électrique réversible appelée « génératrice-démarreur ». Cette génératrice-démarreur a deux fonctions. Elle permet d'une part, en mode démarreur, le démarrage du moteur thermique principal auquel elle est reliée et d'autre part, en mode génératrice, entraînée en rotation par le moteur thermique principal, de générer l'électricité pour un réseau électrique de bord de l'aéronef. Cette génératrice-démarreur ne fournit par contre aucune puissance mécanique à la boîte de transmission principale de puissance mécanique. Un alternato-démarreur peut également être utilisé en lieu et place d'une génératrice-démarreur.

Un aéronef comporte également une architecture électrique destinée à alimenter d'une part chaque démarreur ou génératrice-démarreur afin de démarrer chaque moteur thermique principal de l'installation motrice de l'aéronef et d'autre part les équipements électriques de l'aéronef. Pour certains aéronefs, une telle architecture comporte également deux réseaux électriques, à savoir un réseau électrique primaire à basse tension, désigné par l'acronyme « LV » correspondant à la désignation en langue anglaise « Low Voltage », et un réseau électrique secondaire à très basse tension, désigné par l'acronyme « VLV » pour la désignation en langue anglaise « Very Low Voltage ».

On considère que, dans un réseau électrique primaire à basse tension, la tension électrique d'un courant électrique continu est comprise entre 120 Volts (120V) et 1500V alors que la tension électrique d'un courant électrique alternatif est comprise entre 50V et 1000V. De même, on considère que, dans un réseau électrique secondaire à très basse tension, la tension électrique d'un courant électrique continu est inférieure ou égale à 120V alors que la tension électrique d'un courant électrique alternatif est inférieure ou égale à 50V.

Le réseau électrique primaire à basse tension est généralement alimenté électriquement par un alternateur entraîné mécaniquement par la boîte de transmission principale de puissance mécanique lorsqu'au moins un moteur thermique de l'installation motrice est démarré. Le réseau électrique secondaire à très basse tension peut être quant à lui alimenté par un ou plusieurs moyens de stockage de courant électrique de l'architecture électrique, par le réseau électrique primaire à basse tension, par l'intermédiaire d'un transformateur-redresseur désigné par l'acronyme « TRU » correspondant à la désignation en langue anglaise « Transformer Rectifier Unit » ou bien par un ou plusieurs génératrices-démarreurs de l'installation motrice fonctionnant en tant que génératrice.

Chaque moyen de stockage de courant électrique constitue donc une source électrique du réseau électrique secondaire à très basse tension lorsque chaque moteur thermique principal de l'installation motrice est arrêté, tout du moins tant qu'au moins un moyen de stockage de courant électrique comporte de l'énergie électrique. Le réseau électrique primaire à basse tension constitue une autre source électrique dès que la boîte de transmission principale de puissance mécanique est entraînée en rotation, de même qu'une génératrice-démarreur dès qu'un moteur thermique principal fonctionne. Ce réseau électrique secondaire à très basse tension permet ainsi d'alimenter les équipements électriques de l'aéronef et est à ce titre désigné par l'expression « réseau électrique de bord » ou plus simplement pour la suite de la description « réseau de bord ».

En outre, par souci de simplification, un réseau électrique est désigné par la suite plus simplement par le terme « réseau ».

Un réseau de bord fournit par exemple, selon la norme EN-2282 utilisée dans le domaine aéronautique, un courant électrique continu d'une tension électrique de 28V et le réseau primaire à basse tension fournit un courant électrique alternatif triphasé d'une tension électrique de 115V. Un moyen de stockage peut être rechargeable ou non rechargeable et constitué par une batterie, une pile thermique ou tout autre dispositif susceptible de fournir une puissance électrique de manière autonome. Une autre source électrique utilisable pour le réseau de bord, notamment lorsque l'aéronef est au sol, est un groupe de fourniture d'électricité au sol, désigné par l'acronyme « GPU » correspondant à la désignation en langue anglaise « Ground Power Unit », ce groupe de fourniture d'électricité au sol étant alors lié à l'aéronef et au réseau de bord en particulier.

L'art antérieur comporte plusieurs documents décrivant des architectures électriques de véhicules, notamment les documents EP 1130737 et US 2010/0193630.

Le document EP 1130737 décrit une installation électrique destinée à un véhicule automobile comportant deux réseaux électriques de tensions électriques différentes, deux dispositifs de stockage d'énergie électrique, un générateur de courant électrique, un convertisseur réversible et un calculateur pilotant le convertisseur. Les deux dispositifs de stockage d'énergie électrique sont connectés entre eux en série et agencés entre les deux réseaux électriques et entre deux bornes du convertisseur. Une troisième borne du convertisseur est reliée à la liaison électrique reliant ces deux dispositifs de stockage. Le calculateur pilote le convertisseur afin d'une part d'optimiser l'utilisation et la recharge des deux dispositifs de stockage d'énergie électrique en fonction des consommations électriques des deux réseaux électriques et d'autre part d'alimenter un réseau électrique avec l'autre réseau électrique.

Le document US 2010/0193630 décrit une architecture électrique destinée à un aéronef comportant des réseaux de distribution électrique pour charges de forte puissance et des réseaux de distribution électrique pour charges conventionnelles. Chaque canal est alimenté par un générateur de courant électrique dédié.

On connaît également le document FR 2901431 qui décrit un circuit de conversion d'un courant électrique alternatif en un courant électrique continu. Ce circuit de conversion comporte notamment un transformateur de puissance, un redresseur formé de diodes et un condensateur de forte capacité connecté entre les bornes de sortie du redresseur

En outre, une installation motrice d'un aéronef comporte parfois un moteur thermique auxiliaire entraînant la boîte de transmission principale de puissance mécanique laquelle entraine alors un alternateur. Le moteur thermique auxiliaire constitue un groupe auxiliaire de puissance, désigné par l'acronyme « APU » correspondant à la désignation en langue anglaise « Auxiliary Power Unit ». Un tel alternateur peut également être relié directement au moteur thermique auxiliaire par exemple pour les avions. Ce groupe auxiliaire de puissance est une source électrique du réseau primaire à basse tension.

Par ailleurs, le démarrage d'un moteur principal nécessite une puissance mécanique importante, généralement supérieure à 12kW, pendant une durée pouvant aller jusqu'à plusieurs dizaines de secondes. Cette puissance est généralement fournie par le réseau de bord qui fournit alors un courant électrique d'une intensité très importante pour atteindre le niveau de puissance requis. Par exemple, pour un réseau de bord fournissant un courant électrique continu d'une tension électrique de 28V, cette intensité est de l'ordre de 1000 ampères (1000A).

Une telle intensité impose de dimensionner en conséquence l'ensemble de l'architecture électrique de l'aéronef, en particulier les câbles électriques de transfert de ces courants électriques, les moyens de stockage et les démarreurs, entraînant une masse importante pour cette architecture électrique. Dans le but de réduire cette masse, il est possible d'alimenter chaque démarreur par le réseau primaire à basse tension afin de réduire l'intensité du courant électrique nécessaire au démarrage d'un moteur thermique.

Cependant, selon une telle architecture électrique, la génératrice-démarreur doit comporter des moyens de conversion afin d'une part d'être alimentée par le réseau primaire à basse tension pour le démarrage d'un moteur thermique et d'autre part de constituer une source électrique du réseau de bord, ces moyens de conversion tendant à réduire de manière significative tout gain de masse.

L'art antérieur comporte plusieurs documents décrivant des architectures électriques destinées à faciliter le démarrage d'un moteur thermique d'un aéronef.

Notamment, on connaît le document US 8089170 qui décrit une architecture électrique comprenant plusieurs sous-systèmes munis respectivement d'une génératrice-démarreur et d'une unité de conversion de puissance. Les sous-systèmes sont agencés en parallèle et permettent que le couple nécessaire au démarrage du moteur thermique soit réparti sur l'ensemble des génératrices-démarreurs qui fournissent ainsi un couple réduit.

Le document US 7615892 décrit une architecture électrique comprenant une multitude de modules de conversion agencés en parallèle et contrôlés indépendamment les uns des autres. Ces modules de conversion permettent d'une part de démarrer un moteur thermique via une génératrice-démarreur et d'autre part de fournir une puissance à d'autres appareils. En cas de pannes d'un ou plusieurs modules de conversion, d'autres modules peuvent prendre le relais et pallier ces pannes sans remettre en cause le fonctionnement de l'architecture électrique.

De plus, le document US 8339810 décrit un groupe principal de puissance pour un véhicule au sol, tel un avion. Ce groupe accepte une large plage de courants électriques alternatifs en entrée et fournit plusieurs courants électriques continus en sortie. Ce groupe principal de puissance comporte un redresseur pour transformer un courant électrique alternatif en courant électrique continu, un convertisseur hautes fréquences de découplage et un transformateur capable de fournir en sortie deux courants électriques continus de tensions électriques différentes afin par exemple d'alimenter d'une part un démarreur d'un moteur thermique et d'autre part des appareils à bord du véhicule.

Par ailleurs, le document US 5325042 décrit un dispositif électrique de démarrage d'un groupe auxiliaire de puissance permettant de minimiser les dégradations de la qualité du signal d'alimentation et les émissions d'interférence électromagnétique (EMI). Le système comporte notamment un transformateur-redresseur pour transformer un courant électrique alternatif triphasé en un courant électrique continu de tension électrique variable. Le transformateur-redresseur comporte des enroulements primaires triphasés, deux groupes d'enroulements secondaires triphasés, couplés respectivement en étoile et en triangle, deux ponts redresseurs liés respectivement à un groupe d'enroulements secondaires et un condensateur.

On connaît le document US 2013/0106372 qui décrit un transformateur de tension électrique régulée permettant à partir d'une tension électrique d'entrée de fournir deux tensions électriques de sortie. Ce transformateur est actif et consomme donc de l'énergie afin de réguler les tensions de sortie, ces deux tensions de sortie étant indépendantes et non liées entre elles par un facteur multiplicateur.

Enfin, on connaît le document FR 2 962 407 qui se rapporte à l'alimentation électrique d'un aéronef.

La présente invention a alors pour objet de proposer une architecture électrique à double réseau secondaire pour un aéronef permettant de s'affranchir des limitations mentionnées ci-dessus et en particulier d'optimiser le dimensionnement de cette architecture électrique en séparant sur deux réseaux secondaires distincts les phases de démarrage des moteurs thermiques principaux de l'installation motrice et d'alimentation électrique du réseau de bord de l'aéronef. La présente invention a également pour objet un procédé de gestion d'une telle architecture électrique à double réseau secondaire pour le démarrage d'un moteur thermique principal. La présente invention revendique une architecture électrique à double réseau secondaire dans la revendication 1 et le procédé correspondant dans la revendication 13. Les modes de réalisation préférés sont revendiqués dans les revendications dépendantes.

Selon l'invention, une architecture électrique à double réseau secondaire pour un aéronef comporte :
- deux réseaux électriques secondaires, susceptibles de délivrer respectivement un courant électrique secondaire avec une tension électrique secondaire,
- un ou plusieurs composants électriques, et
- au moins une source électrique reliée à au moins un réseau électrique secondaire.

L'architecture électrique à double réseau secondaire est destinée à fournir le courant électrique à bord d'un aéronef et à alimenter notamment les équipements électriques de cet aéronef. Une source électrique fournit le courant électrique nécessaire aux réseaux secondaires pour alimenter ces équipements. Une source électrique peut être un moyen de stockage d'énergie électrique rechargeable, telle une batterie, un moyen de stockage d'énergie électrique non rechargeable, telle une pile thermique, ou bien un générateur entraîné mécaniquement par une boîte de transmission principale de puissance mécanique, un groupe de puissance auxiliaire ou un groupe de fourniture d'électricité au sol.

Cette architecture électrique à double réseau secondaire est remarquable en ce qu'un composant électrique commun étant relié électriquement aux deux réseaux secondaires, chaque réseau secondaire comporte un contacteur permettant de relier électriquement chaque réseau secondaire avec le composant électrique commun, les contacteurs étant liés entre eux de sorte qu'un contacteur ne peut pas être fermé tant que l'autre contacteur n'est pas ouvert afin que le composant électrique commun ne puisse pas être lié électriquement simultanément aux deux réseaux secondaires.

Les contacteurs peuvent être liés entre eux de façon mécanique, électrique ou bien électronique. La liaison entre les contacteurs rend impossible que deux contacteurs soient fermés simultanément. Par contre, les deux contacteurs peuvent être ouverts simultanément, notamment sur une phase transitoire. Cette logique de fermeture et d'ouverture des contacteurs permet ainsi de ne pas propager une tension électrique d'un réseau secondaire sur un autre réseau secondaire. De la sorte, cette logique de fermeture et d'ouverture des contacteurs permet de réaliser un objectif principal de sécurisation de ces réseaux secondaires afin de protéger des équipements reliés à chaque réseau secondaire d'une tension pour laquelle ils ne sont pas qualifiés et qui pourrait être destructrice pour ces équipements. Cette logique de fermeture et d'ouverture des contacteurs fonctionne selon la logique du « ou exclusif ».

L'architecture électrique à double réseau secondaire selon l'invention permet avantageusement de lier électriquement un ou plusieurs composants communs selon les circonstances ou bien l'utilisation de chacun de ces composants aux deux réseaux secondaires.

Cette fonctionnalité est particulièrement utile pour les composants communs ayant deux phases de fonctionnement différentes, par exemple une première phase de fonctionnement très consommatrice de courant électrique et nécessitant donc un courant électrique de forte intensité et une seconde phase de fonctionnement consommatrice d'un courant électrique de plus faible intensité ou bien génératrice d'un courant électrique.

C'est par exemple le cas d'une génératrice-démarreur liée mécaniquement à un moteur thermique qui nécessite une puissance électrique importante pour le démarrage du moteur thermique et fonctionne ensuite en mode génératrice de courant électrique une fois le moteur thermique démarré. De fait, un premier réseau secondaire de cette architecture électrique peut être relié à la génératrice-démarreur fonctionnant en mode génératrice, un deuxième réseau secondaire de l'architecture électrique à double réseau étant utilisé pour alimenter la génératrice-démarreur pour démarrer le moteur thermique. Ce deuxième réseau secondaire est alors utilisé spécifiquement pour le démarrage du ou des moteurs thermique d'un aéronef alors que le premier réseau secondaire constitue le réseau de bord de l'aéronef alimentant les équipements électriques de l'aéronef et alimenté entre autres par la génératrice-démarreur qui constitue alors une source électrique de ce premier réseau secondaire.

En outre, la phase de démarrage d'un moteur thermique est une phase de courte durée de l'ordre de quelques secondes à quelques dizaines de secondes. En conséquence, même si un courant électrique de forte intensité circule dans ce deuxième réseau secondaire pour alimenter la génératrice-démarreur, cette circulation est de courte durée. Par suite, le dimensionnement de ce deuxième réseau secondaire peut être optimisé, en particulier en termes de section des câbles électriques dans lesquels circule le courant électrique de forte intensité, limitant ainsi la masse de ces câbles électriques.

De même, le réseau de bord n'alimentant pas la génératrice-démarreur, mais seulement les équipements électriques de l'aéronef, les sections des câbles électriques de ce réseau de bord peuvent être réduites et optimisées, réduisant également la masse de ces câbles électriques et donc la masse de l'architecture électrique de l'aéronef.

Par ailleurs, la tension électrique du réseau de bord d'un aéronef respecte généralement la norme EN-2282 et délivre un courant électrique continu de tension électrique égale à 28V.

De fait, selon une première architecture électrique à double réseau, les tensions électriques des courants électriques délivrés par le premier réseau secondaire et le deuxième réseau secondaire peuvent être égales et conformes à cette norme EN-2282. L'optimisation de cette première architecture électrique à double réseau secondaire se situe alors principalement sur le temps d'utilisation de chacun des deux réseaux secondaires, le deuxième réseau secondaire étant dimensionné et utilisé pour un courant électrique continu de forte intensité pendant un courte durée, le premier réseau secondaire étant dimensionné et utilisé pour un courant électrique continu d'intensité plus faible.

Avantageusement, selon une deuxième architecture électrique à double réseau, le premier réseau secondaire délivre un courant électrique secondaire avec une première tension électrique secondaire différente de la deuxième tension électrique secondaire d'un deuxième courant électrique secondaire délivré par le deuxième réseau secondaire. De préférence, le premier réseau secondaire délivre un courant électrique secondaire continu avec une première tension électrique secondaire égale à 28V selon la norme EN-2282 et le deuxième réseau secondaire délivre un courant électrique secondaire continu avec une deuxième tension strictement supérieure à la première tension électrique secondaire, par exemple égale au double de la première tension électrique, à savoir 56V. Ces deux réseaux secondaires se situent dans le domaine des réseaux à très basse tension.

Ces tensions électriques sont des valeurs nominales qui peuvent fluctuer au cours du fonctionnement de l'aéronef.

En conséquence, la deuxième tension électrique secondaire étant augmentée, l'intensité du courant électrique secondaire délivré par le deuxième réseau secondaire peut être réduite pour fournir une même puissance. De fait, l'intensité du courant électrique secondaire délivré par le deuxième réseau secondaire peut être divisée par deux lorsque la deuxième tension électrique secondaire est par exemple égale au double de la tension électrique utilisée traditionnellement et définie par la norme EN-2282.

Par suite, outre les dimensions des câbles électriques, la génératrice-démarreur peut également être optimisée suite à la réduction de l'intensité du courant électrique l'alimentant, ce qui engendre une baisse de la masse de cette génératrice-démarreur et de celle de l'architecture électrique à double réseau secondaire.

Par ailleurs, un réseau doit comporter ou bien être relié à une source électrique pour délivrer un courant électrique. Comme précédemment évoqué, la génératrice-démarreur est une source électrique du premier réseau secondaire, à savoir le réseau de bord, mais uniquement une fois le moteur thermique démarré. De fait, le premier réseau secondaire doit comporter au moins une autre source électrique pour délivrer un courant électrique lorsque le moteur n'a pas démarré, l'aéronef étant au sol. Un réseau de bord comporte généralement un moyen de stockage d'énergie électrique comme source électrique. De plus, le réseau de bord d'un aéronef peut être relié, lorsque l'aéronef est au sol, à un groupe de fourniture d'électricité au sol.

Le deuxième réseau secondaire doit également être relié à une source électrique pour alimenter la génératrice-démarreur et permettre ainsi le démarrage du moteur thermique. Toutefois, ce besoin est limité uniquement à cette phase de démarrage. Plusieurs modes de réalisation pour la liaison du deuxième réseau secondaire avec une source électrique sont possibles.

Selon un premier mode de réalisation, le deuxième réseau secondaire comporte au moins une source électrique autonome, tel un moyen de stockage d'énergie électrique, pour alimenter seul la génératrice-démarreur et, par suite, assurer le démarrage d'un moteur thermique. Toutefois, cette alimentation électrique de la génératrice-démarreur n'ayant lieu que pendant une courte durée, la masse d'une source électrique autonome peut être pénalisante pour l'aéronef vis-à-vis de son faible taux d'utilisation. De plus, lorsque la deuxième tension électrique secondaire est strictement supérieure à la première tension électrique secondaire, et, par suite, différente des tensions électriques préconisées par la norme EN-2282, une telle source électrique autonome n'est généralement pas standard et de fait pourrait être coûteuse.

Selon un deuxième mode de réalisation, le deuxième réseau secondaire est relié à au moins une source électrique autonome uniquement lorsque l'aéronef est au sol pour alimenter seul la génératrice-démarreur et, par suite, assurer le démarrage de chaque moteur thermique. Ensuite, une fois chaque moteur thermique démarré, le deuxième mode de réalisation n'est lié à aucune source électrique, permettant avantageusement de ne pas pénaliser la masse de l'aéronef en vol. Cette source électrique autonome est par exemple un moyen de stockage d'énergie électrique ou bien un groupe de fourniture d'électricité au sol.

Selon un troisième mode de réalisation, une source électrique du deuxième réseau secondaire peut également être constituée partiellement par le premier réseau secondaire. L'architecture électrique à double réseau secondaire comporte alors au moins deux sources électriques autonomes, une première source électrique étant agencée sur le premier réseau secondaire et fournissant la première tension électrique secondaire au premier réseau secondaire alors qu'une deuxième source électrique est agencée entre le premier réseau secondaire et le deuxième réseau secondaire et fournit une tension électrique égale à la différence entre la deuxième tension électrique secondaire et la première tension électrique secondaire. De la sorte, les deux sources électriques fonctionnent en série et fournissent conjointement la deuxième tension électrique secondaire au deuxième réseau secondaire. De fait, le deuxième réseau secondaire peut alimenter, grâce à la première source électrique et à la deuxième source électrique fonctionnant conjointement, la génératrice-démarreur et, par suite, assurer le démarrage de chaque moteur thermique.

Avantageusement, la masse liée spécifiquement à l'alimentation électrique du deuxième réseau secondaire est réduite, n'étant constituée que par la masse de la deuxième source électrique, la première source électrique étant utilisée de façon conjointe pour alimenter d'une part le premier réseau secondaire et d'autre part le deuxième réseau secondaire. Cette deuxième source électrique peut être amovible et installée lorsque l'aéronef est au sol.

Avantageusement, si la deuxième tension électrique secondaire du deuxième réseau secondaire est égale au double de la tension électrique préconisée par la norme EN-2282, la première source électrique et la deuxième source électrique peuvent être identiques et constituées par exemple par des batteries standards délivrant un courant électrique continu de tension électrique égale à 28V. Par suite, la deuxième source électrique peut éventuellement servir de source électrique de remplacement pour la première source électrique.

Selon un quatrième mode de réalisation, une source électrique du deuxième réseau secondaire peut également être constituée par un autre réseau de l'architecture électrique à double réseau secondaire. En effet, cette architecture électrique comporte, pour certains aéronefs, un réseau primaire relié à au moins une source électrique fournissant un courant électrique alternatif triphasé avec une tension électrique primaire. Ce réseau primaire est à basse tension et a souvent pour source électrique un générateur entraîné mécaniquement directement par un groupe de puissance auxiliaire présent à bord de l'aéronef ou bien par l'intermédiaire d'une boîte de transmission principale de puissance mécanique.

L'architecture électrique à double réseau secondaire selon ce quatrième mode de réalisation comporte alors un réseau primaire muni d'une source électrique et un transformateur-redresseur agencé entre le réseau primaire et les deux réseaux secondaires. Le transformateur-redresseur transforme le courant électrique alternatif triphasé avec une tension électrique primaire circulant dans le réseau primaire en deux courants électriques continus avec respectivement une tension électrique secondaire correspondant au besoin de chaque réseau secondaire. De fait, le deuxième réseau secondaire peut alimenter, grâce à ce réseau primaire et un transformateur-redresseur, la génératrice-démarreur et, par suite, assurer le démarrage de chaque moteur thermique. Le premier réseau secondaire est également alimenté par à ce réseau primaire et le transformateur-redresseur et, par suite permet l'alimentation des composants électriques. Un tel transformateur-redresseur comporte :
- des enroulements primaires triphasés couplés en étoile ou bien en triangle et reliés au réseau primaire, et
- deux ensembles secondaires munis respectivement d'au moins un groupe d'enroulements secondaires triphasés couplés en étoile ou bien en triangle, et d'un pont redresseur agencé entre chaque groupe d'enroulements secondaires triphasés et un réseau secondaire afin qu'un courant électrique secondaire continu avec une tension électrique secondaire alimente chaque réseau secondaire.

Le transformateur-redresseur comporte également un élément en matériau ferromagnétique assurant un couplage magnétique et, par suite, un transfert énergétique entre les enroulements primaires triphasés et les groupes d'enroulements secondaires triphasés. Cet élément en matériau ferromagnétique est par exemple un noyau en matériau ferromagnétique.

De plus, chaque ensemble secondaire est formé par des groupes d'enroulements secondaires triphasés déphasés entre eux de π/(3xn), n étant un nombre entier égal au nombre de groupes d'enroulements secondaires triphasés que comporte l'ensemble secondaire.

Afin de fournir un courant électrique secondaire continu alimentant chaque réseau secondaire suffisamment stable et d'une qualité satisfaisante vis à vis des préconisations de la norme EN-2282, le nombre n de groupes d'enroulements secondaires triphasés est supérieur ou égal à 2.

De préférence, ce nombre n de groupes d'enroulements secondaires triphasés est égal à 2. Ainsi, chaque ensemble secondaire comporte deux groupes d'enroulements secondaires triphasés déphasés entre eux de π/6, couplés respectivement en étoile et en triangle et reliés à un pont redresseur hexaphasé.

En outre, le transformateur-redresseur peut comporter des d'inductances dites d'interphase agencées entre un pont redresseur et un réseau secondaire afin de réduire les courants de circulation inter-ponts.

Les deux ensembles secondaires du transformateur-redresseur sont reliés électriquement de préférence en série, la première tension électrique secondaire du premier réseau secondaire étant la tension électrique aux bornes d'un premier ensemble secondaire alors que la deuxième tension électrique secondaire du deuxième réseau secondaire est la tension électrique aux bornes du premier ensemble secondaire et d'un deuxième ensemble secondaire. Avantageusement, cet assemblage en série permet de mutualiser le premier ensemble secondaire qui est utilisé pour les deux réseaux secondaires, la deuxième tension électrique secondaire étant, comme évoqué précédemment, strictement supérieure à la première tension électrique secondaire.

Toutefois, les ensembles secondaires peuvent ne pas être connectés en série, les tensions électriques secondaires des premiers et deuxième réseaux secondaires étant alors indépendantes. En effet, la première tension électrique secondaire est alors la tension électrique aux bornes du premier ensemble secondaire alors que la deuxième tension électrique secondaire est la tension électrique aux bornes du deuxième ensemble secondaire.

En outre, quel que soit le mode de réalisation de l'invention, un ou plusieurs réseaux secondaires peuvent être ajoutés à l'architecture électrique selon l'invention, par exemple en fonction notamment d'un besoin d'une tension électrique spécifique supplémentaire.

La présente invention a également pour objet un procédé de gestion d'une architecture électrique à double réseau secondaire pour le démarrage d'un moteur thermique d'un aéronef, l'architecture électrique à double réseau secondaire comportant :
- deux réseaux secondaires, susceptibles de délivrer respectivement un courant électrique secondaire avec une tension électrique secondaire,
- un ou plusieurs composants électriques dont au moins un composant électrique commun est relié électriquement à au moins deux réseaux secondaires,
- au moins une source électrique reliée à au moins un réseau secondaire, et
- au moins deux contacteurs agencés respectivement sur un réseau secondaire, chaque contacteur permettant de relier électriquement le réseau secondaire sur lequel il est agencé avec un composant électrique commun, les contacteurs étant liés entre eux deux à deux de sorte qu'un contacteur ne peut pas être fermé tant que l'autre contacteur n'est pas ouvert.

Le procédé de gestion d'une architecture électrique à double réseau secondaire pour le démarrage d'un moteur thermique d'un aéronef comporte les étapes suivantes :
- une première étape d'alimentation électrique d'un deuxième réseau secondaire,
- une deuxième étape de contrôle de l'ouverture d'un premier contacteur agencé sur un premier réseau secondaire,
- une troisième étape de fermeture d'un deuxième contacteur agencé sur le deuxième réseau secondaire,
- une quatrième étape d'alimentation électrique du composant commun par le deuxième réseau secondaire,
- une cinquième étape d'ouverture du deuxième contacteur,
- une sixième étape de fermeture du premier contacteur, et
- une septième étape de liaison électrique du composant commun avec le premier réseau secondaire.

De plus, la deuxième étape de contrôle de l'ouverture d'un premier contacteur interdit l'exécution de la troisième étape de fermeture d'un deuxième contacteur tant que le premier contacteur n'est pas ouvert évitant ainsi que deux contacteurs se trouvent fermés simultanément.

En outre, le composant commun peut être une génératrice-démarreur liée à un moteur thermique. La quatrième étape d'alimentation électrique de la génératrice-démarreur est alors une étape de démarrage du moteur thermique et la septième étape de liaison électrique est une étape de génération d'un courant électrique alimentant le premier réseau secondaire.

L'invention et ses avantages apparaîtront avec plus de détails dans le cadre de la description qui suit avec des exemples de réalisation donnés à titre illustratif en référence aux figures annexées qui représentent :
- les figures 1 à 3, plusieurs exemples d'une architecture électrique à double réseau secondaire pour un aéronef,
- les figures 4 et 5, deux vues de détail de deux transformateurs-redresseurs, et
- figure 6 et 7, deux vues des liaisons entre les contacteurs d'une architecture électrique à double réseau secondaire.

Les éléments présents dans plusieurs figures distinctes sont affectés d'une seule et même référence.

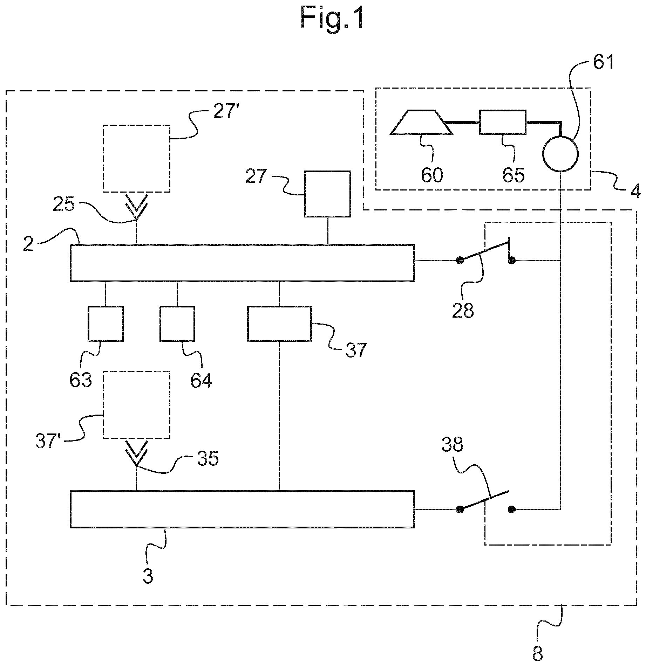

La figure 1 représente un premier exemple d'une architecture électrique à double réseau secondaire 8 comportant deux réseaux électriques secondaires 2,3 reliés à une installation motrice 4.

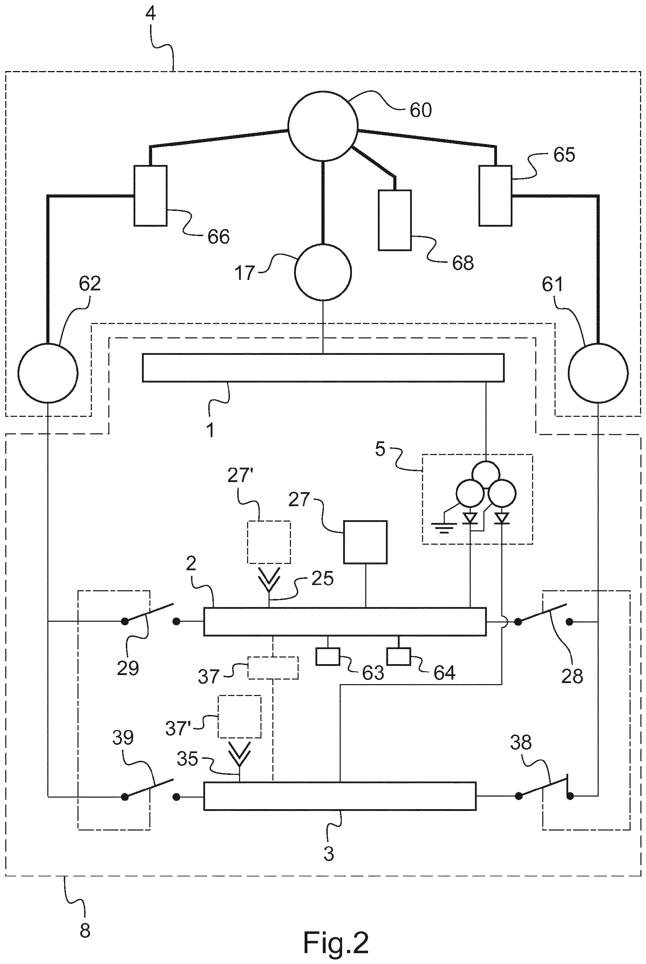

La figure 2 représente un deuxième exemple d'une architecture électrique à double réseau secondaire 8 comportant un réseau électrique primaire 1 et deux réseaux électriques secondaires 2,3, ces trois réseaux étant reliés à une installation motrice 4.

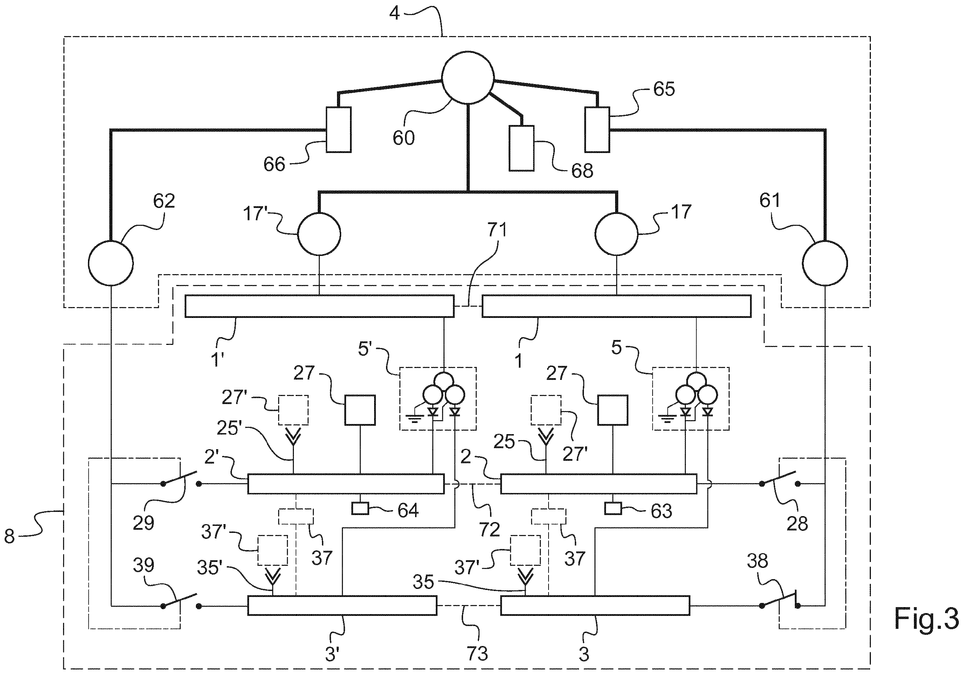

La figure 3 représente un troisième exemple d'une architecture électrique à double réseau secondaire 8 comportant deux réseaux électriques primaires 1,1' et quatre réseaux électriques secondaires 2,3 et 2',3' ces six réseaux étant reliés à une installation motrice 4.

Ces trois exemples d'une architecture électrique à double réseau secondaire 8 sont destinés à équiper un aéronef, par exemple un aéronef à voilure tournante.

Chaque installation motrice 4 comporte au moins un moteur thermique 65,66, tel un turbomoteur, entraînant une boîte de transmission principale de puissance mécanique 60. Chaque moteur thermique 65,66 est lié mécaniquement à une génératrice-démarreur 61,62 permettant d'une part le démarrage du moteur thermique 65,66 lorsque la génératrice-démarreur 61,62 est alimentée électriquement et entraîne en rotation le moteur thermique 65,66 et d'autre part de générer une énergie électrique lorsque le moteur thermique 65,66 a démarré et entraîne en rotation la génératrice-démarreur 61,62.

De façon commune à ces exemples, les réseaux secondaires 2,3,2',3' sont des réseaux à très basse tension, un premier réseau secondaire 2,2' délivrant un premier courant électrique secondaire avec une première tension électrique secondaire US1 égale à 28V, conformément à la norme EN/2282, et un deuxième réseau secondaire 3,3' délivrant un deuxième courant électrique secondaire avec une deuxième tension électrique secondaire US2 égale à 56V, correspondant au double de la première tension électrique secondaire US1.

Le premier réseau secondaire 2,2' comporte une première batterie 27 de 28V constituant une source électrique. Le premier réseau secondaire 2,2' comporte également une borne d'entrée 25 destinée à être connectée, lorsque l'aéronef est au sol, à un groupe de fourniture d'électricité au sol 27' capable de fournir un courant électrique avec une tension électrique de 28V et susceptible de constituer une source électrique complémentaire. Le premier réseau secondaire 2,2' constitue un réseau de bord de l'aéronef et est relié à des composants électriques 63,64 de l'aéronef.

Le deuxième réseau secondaire 3,3' comporte aussi une borne d'entrée 35 destinée à être connectée, lorsque l'aéronef est au sol, à un groupe de fourniture d'électricité au sol 37' capable de fournir un courant électrique avec une tension électrique de 56V et susceptible de constituer une source électrique.

Le premier réseau secondaire 2,2' comporte au moins un premier contacteur 28,29 et le second réseau secondaire 3,3' comporte au moins un deuxième contacteur 38,39. Un premier contacteur 28,29 est lié à un deuxième contacteur 38,39 de sorte que les deux contacteurs 28,29,38,39 qui sont liés entre eux ne peuvent être fermés simultanément. De fait, au moins un des deux contacteurs 28,38 étant toujours ouvert, aucun court-circuit entre les deux réseaux secondaires 2,3 ne peut apparaître.

Selon le premier exemple d'une architecture électrique à double réseau secondaire 8 représenté sur la figure 1, l'architecture électrique à double réseau secondaire 8 comporte une deuxième batterie 37 de 28V constituant une source électrique et agencée entre le premier réseau secondaire 2 et le deuxième réseau secondaire 3. Cette deuxième batterie 37 fonctionne ainsi en série avec la première batterie 27 du premier réseau secondaire 2 afin de fournir avec cette première batterie 27 la deuxième tension électrique secondaire US2 égale à 56V au deuxième réseau secondaire 3. L'architecture électrique à double réseau secondaire 8 comporte un premier contacteur 28 et un deuxième contacteur 38 liés entre eux.

L'installation motrice 4 de ce premier exemple d'une architecture électrique à double réseau secondaire 8 comporte un seul moteur thermique 65 relié à une génératrice-démarreur 61. Cette génératrice-démarreur 61 est reliée au premier réseau secondaire 2 par le premier contacteur 28 et au deuxième réseau secondaire 3 par le deuxième contacteur 38.

Comme représenté sur la figure 1, le premier contacteur 28 est fermé et le premier réseau électrique secondaire 2 est relié électriquement à la génératrice-démarreur 61 alors que le deuxième contacteur 38 est ouvert et le deuxième réseau électrique secondaire 3 n'est pas relié électriquement à la génératrice-démarreur 61. Cette première disposition des contacteurs 28,38 correspond à une phase de fonctionnement en mode génératrice de la génératrice-démarreur 61 qui fournit ainsi un courant électrique au premier réseau secondaire 2 permettant d'une part d'alimenter les composants électriques 63,64 du premier réseau électrique secondaire 2 et d'autre part de recharger la première batterie 27 et la deuxième batterie 37.

A l'inverse, lorsque le deuxième contacteur 38 est fermé, le deuxième réseau électrique secondaire 3 est relié électriquement à la génératrice-démarreur 61. Les deux contacteurs 28,38 étant liés entre eux, le premier contacteur 28 est alors ouvert et le premier réseau électrique secondaire 2 n'est pas relié électriquement à la génératrice-démarreur 61. Cette seconde disposition des contacteurs 28,38 correspond à une phase de fonctionnement motrice de la génératrice-démarreur 61 qui est alimentée par un courant électrique secondaire du deuxième réseau secondaire 3. Le premier réseau secondaire fonctionne alors avec l'énergie électrique fournie par la première batterie 27 afin d'alimenter les composants électriques 63,64.

De plus, la liaison entre les deux contacteurs 28,38 évite avantageusement que les deux contacteurs 28,38 soient fermés simultanément évitant ainsi d'une part tout risque de court-circuit entre les deux réseaux secondaires 2,3 et d'autre part d'alimenter les composants électriques 63,64 avec une tension électrique inadaptée, dans le cas présent la deuxième tension électrique secondaire US2. Cette liaison permet, par contre, que ces contacteurs 28,38 soient ouverts simultanément lors d'un changement d'état de ces contacteurs 28,38.

Grâce à l'utilisation de ces deux contacteurs 28,38 liés entre eux, le deuxième réseau secondaire 3 a pour unique fonction l'alimentation électrique de la génératrice-démarreur 61 avec la deuxième tension électrique secondaire US2. Le premier réseau secondaire 2 est utilisé quant à lui en tant que réseau de bord pour l'alimentation électrique des composants électriques 63,64 de l'aéronef avec la première tension électrique secondaire US1. La deuxième tension électrique secondaire US2, strictement supérieure à la première tension électrique secondaire US1 qui est la tension électrique utilisée traditionnellement pour alimenter une génératrice-démarreur, permet de réduire l'intensité du courant électrique alimentant la génératrice-démarreur 61. En conséquence, le dimensionnement des câbles électriques et de la génératrice-démarreur 61 peut être adapté à ces conditions afin de réduire les masses de ces câbles électriques et de la génératrice-démarreur 61.

Selon le deuxième exemple d'une architecture électrique à double réseau secondaire 8 représenté sur la figure 2, l'architecture électrique à double réseau secondaire 8 comporte en plus de deux réseaux secondaires 2,3 un réseau primaire 1. Les deux réseaux secondaires 2,3 sont sensiblement identiques au premier exemple, la seule différence étant la présence de deux contacteurs 28,29,38,39 pour chaque réseau secondaire 2,3, soit quatre contacteurs 28,29,38,39 pour l'ensemble de l'architecture électrique à double réseau secondaire 8.

L'installation motrice 4 de ce deuxième exemple comporte deux moteurs thermiques 65,66 reliés respectivement à une génératrice-démarreur 61,62. L'installation motrice 4 comporte également une unité auxiliaire de puissance 68 et un alternateur 17, l'unité auxiliaire de puissance 68 pouvant entraîner en rotation la boîte de transmission principale de puissance mécanique 60 lorsqu'aucun moteur thermique 65,66 ne fonctionne, et l'alternateur 17 étant entraîné en rotation par la boîte de transmission principale de puissance mécanique 60. De fait, l'alternateur 17 est relié électriquement au réseau primaire 1 et peut délivrer pour ce réseau primaire 1 un courant électrique alternatif triphasé d'une tension électrique primaire UP égale à 115V lorsque la boîte de transmission principale de puissance mécanique 60 est entraînée soit par un ou bien les deux moteurs thermiques 65,66, soit par l'unité auxiliaire de puissance 68.

Chaque génératrice-démarreur 61,62 est reliée au premier réseau secondaire 2 respectivement par un premier contacteur 28,29 et au deuxième réseau secondaire 3 respectivement par un deuxième contacteur 38,39. Les deux contacteurs 28,29,38,39 des deux réseaux secondaires 2,3 liés à une génératrice-démarreur 61,62 sont liés entre eux comme précédemment évoqué pour le premier exemple.

Le fonctionnement des deux réseaux secondaires 2,3 est identique au premier exemple d'architecture électrique à double réseau secondaire 8. Les deux ensembles de contacteurs 28,29,38,39 reliés respectivement à une génératrice-démarreur 61,62 permet d'alimenter alternativement chaque génératrice-démarreur 61,62 et de démarrer ainsi alternativement les deux moteurs thermiques 65,66.

En outre, comme représenté sur la figure 2, le deuxième contacteur 38, lié à la première génératrice-démarreur 61, est fermé afin de démarrer le second moteur thermique 66, le premier contacteur 28 étant ouvert ne permettant pas l'alimentation des composants électriques 63,64. Ensuite, dès le démarrage d'un premier moteur thermique 65, la première génératrice-démarreur 61 correspondant peut alimenter le premier réseau secondaire 2, le deuxième contacteur 38 étant alors ouvert, puis le premier contacteur 28 correspondant est fermé permettant alors l'alimentation des composants électriques 63,64. Les autres contacteurs 29,39 sont ouverts, comme représenté sur la figure 2, la deuxième génératrice-démarreur 62 n'étant reliée électriquement ni au premier réseau secondaire 2, ni au deuxième réseau secondaire 3.

L'utilisation de la deuxième batterie 37 peut être optionnelle pour alimenter le deuxième réseau secondaire 3 conjointement avec la première batterie 27 du premier réseau secondaire 1. En effet, le réseau primaire 1 peut être utilisé comme une source électrique du premier réseau secondaire 2 et du deuxième réseau secondaire 3. Dans ce but, l'architecture électrique à double réseau secondaire 8 comporte un transformateur-redresseur 5 agencé entre le réseau primaire 1 et les deux réseaux secondaires 2,3.

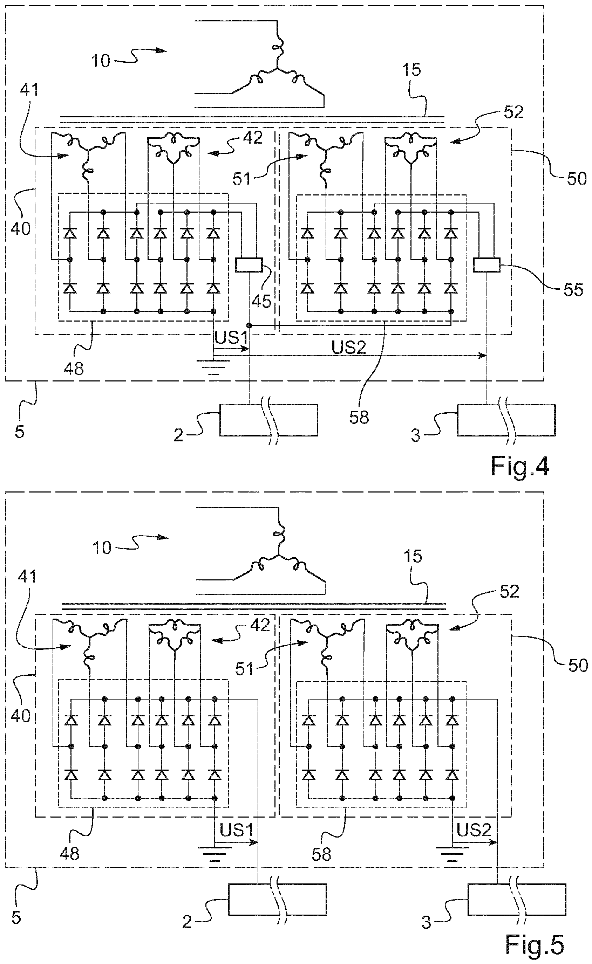

Un transformateur-redresseur 5 est représenté en détail sur les figures 4 et 5 et permet à partir d'un courant électrique alternatif en entrée de délivrer simultanément deux courants électriques continus avec des tensions électriques secondaires US1,US2 différentes. Ce transformateur-redresseur 5 comporte :
- des enroulements primaires triphasés 10 couplés en étoile et relié au réseau électrique primaire 1,
- deux ensembles secondaires 40,50 munis respectivement de deux groupes d'enroulements secondaires triphasés 41,42,51,52 couplés respectivement en étoile et en triangle, et d'un pont redresseur hexaphasé 48,58, relié aux deux groupes d'enroulements secondaires triphasés 41,42,51,52 et agencé entre deux groupes d'enroulements secondaires triphasés 41,42,51,52 et un réseau électrique secondaire 2,3 afin qu'un courant électrique secondaire continu avec une tension électrique secondaire US1,US2 alimente chaque réseau électrique secondaire 2,3, et
- un noyau 15 en matériau ferromagnétique assurant un couplage électromagnétique entre les enroulements primaires triphasé 10 et les groupes d'enroulements secondaires triphasés 41,42,51,52.

Selon la figure 4, les deux ensembles secondaires 40,50 sont reliés électriquement en série. En conséquence, la première tension électrique secondaire US1 du premier réseau secondaire 2 est la tension électrique aux bornes du premier ensemble secondaire 40 alors que la deuxième tension électrique secondaire US2 du deuxième réseau secondaire 3 est la tension électrique aux bornes du premier ensemble secondaire 40 et du deuxième ensemble secondaire 50. De fait, la deuxième tension électrique secondaire US2 est la somme des tensions électriques aux bornes des deux ensembles secondaires 40,50 et est strictement supérieure à la première tension électrique secondaire US1.

Selon la figure 5, les deux ensembles secondaires 40,50 ne sont pas connectés électriquement en série. Les tensions électriques secondaires US1,US2 des premiers et deuxième réseaux secondaires 2,3 sont alors indépendantes et égales respectivement à la tension électrique aux bornes de chaque ensemble secondaire 40,50.

Entre outre, le transformateur-redresseur 5 représenté sur la figure 4 comporte des d'inductances dites d'interphase 45,55 agencées respectivement entre chaque pont redresseur hexaphasé 48,58 et chaque réseau secondaire 2,3.

Selon le troisième exemple d'une architecture électrique à double réseau secondaire 8 représenté sur la figure 3, l'architecture électrique à double réseau secondaire 8 est l'association de deux architectures électriques sensiblement identique au deuxième exemple et agencé de façon symétrique. Cette architecture électrique à double réseau secondaire 8 selon ce troisième exemple comporte deux réseaux primaires 1 et 1' et quatre réseaux secondaires 2,2' et 3,3'.

L'installation motrice 4 de ce troisième exemple comporte deux moteurs thermiques 65,66 reliés respectivement à une génératrice-démarreur 61,62. L'installation motrice 4 comporte également une unité auxiliaire de puissance 68 et deux alternateurs 17,17'. Chaque alternateur 17,17' est entraîné en rotation par la boîte de transmission principale de puissance mécanique 60 et relié électriquement respectivement à un réseau primaire 1 et 1'. Chaque alternateur 17,17' est ainsi susceptible de délivrer un courant électrique alternatif triphasé d'une tension électrique primaire UP égale à 115V pour un réseau primaire 1 et 1' lorsque la boîte de transmission principale de puissance mécanique 60 est entraînée en rotation.

Chaque réseau primaire 1 et 1' est relié à deux réseaux secondaires 2,2' et 3,3' par l'intermédiaire d'un transformateur-redresseur 5 et 5' comme pour le deuxième exemple. Les réseaux secondaires 2,2' et 3,3' sont sensiblement identiques au deuxième exemple, la seule différence étant la présence d'un seul contacteur 28,29,38,39 pour chaque réseau secondaire 2,2' et 3,3', soit quatre contacteurs 28,29,38,39 pour l'architecture électrique à double réseau secondaire 8.

Les génératrices-démarreurs 61,62 sont reliées à un premier réseau secondaire 2,2' respectivement par un premier contacteur 28,29 et à un deuxième réseau secondaire 3,3' respectivement par un deuxième contacteur 38,39. Les deux contacteurs 28,29,38,39 des deux réseaux secondaires 2,2' et 3,3' liés à une même génératrice-démarreur 61,62 sont liés entre eux comme précédemment évoqué.

De fait, chaque ensemble constitué par un réseau primaire 1 et 1', deux réseaux secondaires 2,2' et 3,3' et l'installation motrice 4 a un fonctionnement analogue au deuxième exemple d'architecture électrique à double réseau secondaire 8.

L'utilisation de ces deux ensembles permet avantageusement de gérer de façon indépendante le démarrage de chaque moteur thermique 65,66 à partir d'un deuxième réseau secondaire 3,3' et l'alimentation en courant électrique de chaque premier réseau secondaire 2,2'. Ainsi chaque ensemble peut palier une panne d'un autre ensemble et assurer l'alimentation électrique d'un premier réseau secondaire 2,2' afin d'alimenter les composants électriques 63,64 de l'aéronef.

En outre, des liaisons optionnelles 71,72,73 sont agencées respectivement entre les deux réseaux primaires 1 et 1' entre les deux premiers réseaux secondaires 2,2' et entre les deux deuxièmes réseaux secondaires 3,3'. Ces liaisons optionnelles 71,72,73 peuvent être activées en fonction de la panne affectant l'architecture électrique à double réseau secondaire 8.

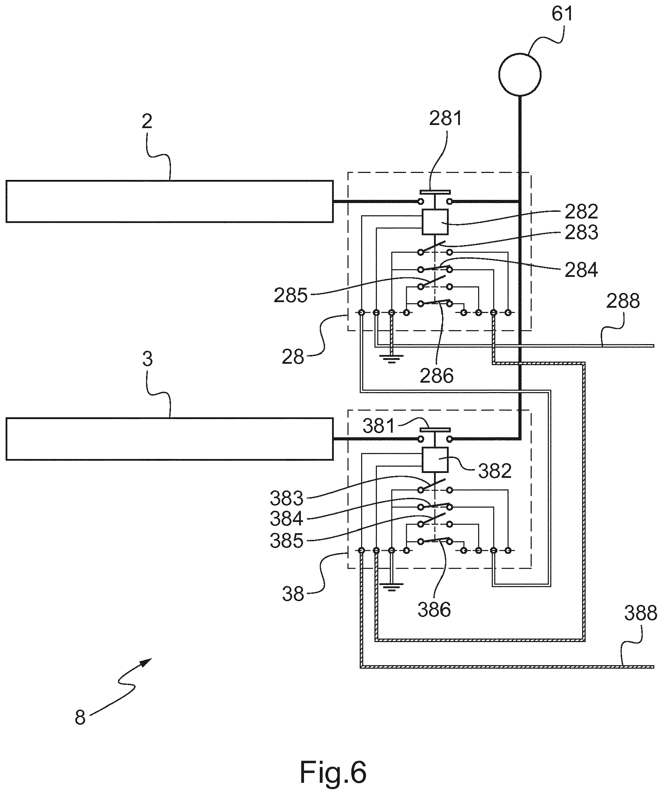

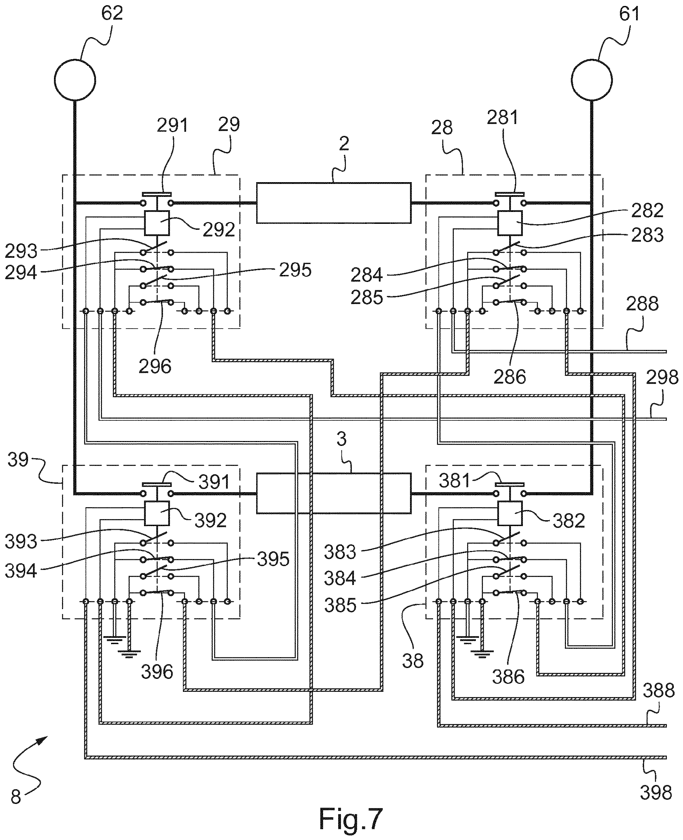

Les figures 6 et 7 représentent en détail les contacteurs 28,29,38,39 d'une architecture électrique à double réseau secondaire 8 ainsi que les liaisons électriques reliant ces contacteurs 28,29,38,39 entre eux afin de permettre leur fonctionnement particulier.

Les contacteurs 28,38 et leurs liaisons électriques représentés sur la figure 6 sont destinés au premier exemple d'une architecture électrique à double réseau secondaire 8 représenté sur la figure 1. Sur cette figure 6, l'architecture électrique à double réseau secondaire 8 est représentée de façon simplifiée, seuls le premier réseau secondaire 2, le deuxième réseau secondaire 3 et la génératrice-démarreur 61 étant visibles avec les contacteurs 28,38.

Les contacteurs 28,29,38,39 et leurs liaisons électriques représentés sur la figure 7 sont destinés au deuxième exemple et au troisième exemple d'une architecture électrique à double réseau secondaire 8 représentés respectivement sur les figures 2 et 3. Sur cette figure 7, l'architecture électrique à double réseau secondaire 8 est représentée de façon simplifiée, seuls un premier réseau secondaire 2, un deuxième réseau secondaire 3 et les deux génératrices-démarreurs 61,62 étant visibles avec les contacteurs 28,29,38,39. Pour retrouver précisément le troisième exemple d'une architecture électrique à double réseau secondaire 8, chaque réseau secondaire 2,3 doit être dissocié afin de former quatre réseaux secondaires 2,2' et 3,3' distincts.

De façon commune aux figures 6 et 7, un contacteur 28,29, 38,39 comporte un interrupteur de puissance 281,291,381,391 quatre contacts auxiliaires 283,293,383,393, 284,294,384,394, 285,295,385,395, 286,296,386,396 un bobinage 282,292,382,392 et des bornes reliées respectivement aux contacts auxiliaires 283,293,383,393, 284,294,384,394, 285,295,385,395, 286,296, 386,396 et au bobinage 282,292,382,392.

L'interrupteur de puissance 281,291,381,391 permet d'ouvrir et de fermer la liaison électrique auquel est relié le contacteur 28,29,38,39, à savoir dans le cas présent la liaison électrique reliant respectivement un réseau secondaire 2,2',3,3' avec une génératrice-démarreur 61,62.

Les contacts auxiliaires d'un contacteur 28,29,38,39 permettent de fournir une information de l'état de l'interrupteur de puissance 281,291,381,391, à savoir si cet interrupteur de puissance 281,291,381,391 est ouvert ou bien fermé, par l'intermédiaire des bornes auxquelles ils sont reliés. Dans ce but, deux premiers contacts auxiliaires 283,293,383,393, 285,295,385,395 sont ouverts lorsque l'interrupteur de puissance 281,291,381,391 est ouvert alors que deux seconds contacts auxiliaires 284,294,384,394, 286,296,386,396 sont fermés.

Le bobinage 282,292,382,392 permet lorsqu'il est alimenté de modifier simultanément l'état de l'interrupteur de puissance 281,291,381,391 et l'état de chaque contact auxiliaire. De fait, lorsque le bobinage 282,292,382,392 est alimenté, l'interrupteur de puissance 281,291,381,391 passe de l'état ouvert à l'état fermé de même que les premiers contacts auxiliaires 283,293,383,393, 285,295,385,395 alors que les seconds contacts auxiliaires 284,294,384,394, 286,296,386,396 passe de l'état fermé à l'état ouvert.

Les contacteurs 28,38 applicables au premier exemple d'une architecture électrique à double réseau secondaire 8 et représentés sur la figure 6 sont alimentés respectivement par un circuit de commande 288,388 afin de piloter la fermeture de leur interrupteur de puissance 281,381. Chaque circuit de commande 288,388 d'un contacteur 28,38 est relié d'une part aux bornes alimentant le bobinage 282,382 de ce contacteur 28,38 et d'autre part aux bornes d'un second contact auxiliaire 284,384 de l'autre contacteur 28,38. De la sorte, l'interrupteur de puissance 281,381 d'un contacteur 28,38 ne peut être fermé que lorsque l'interrupteur de puissance 281,381 de l'autre contacteur 28,38 est ouvert interdisant de la sorte que les deux contacteurs 28,38 soient fermés simultanément.

Les contacteurs 28,29,38,39 applicables aux deuxième et troisième exemples d'une architecture électrique à double réseau secondaire 8 et représentés sur la figure 7 sont alimentés respectivement par un circuit de commande 288,298,388,398 afin de piloter la fermeture de leur interrupteur de puissance 281,291,381,391. Chaque circuit de commande 288,298,388,398 d'un contacteur 28,29,38,39 est relié d'une part aux bornes alimentant le bobinage 282,292,382,392 de ce contacteur 28,29, 38,39 et d'autre part aux bornes d'un second contact auxiliaire 284,294,384,394 d'un ou de deux autres contacteurs 28,29,38,39.

En effet, le circuit de commande 288,298, alimentant un contacteur 28,29 destiné à relier respectivement un premier réseau secondaire 2,2' à une génératrice-démarreur 61,62 en mode génératrice est relié d'une part aux bornes alimentant le bobinage 282,292 de ce contacteur 28,29 et d'autre part aux bornes d'un second contact auxiliaire 384,394 d'un contacteur 38,39 destiné à relier respectivement un second réseau secondaire 3,3' à la même génératrice-démarreur 61,62 afin de l'alimenter pour le démarrage d'un moteur thermique 65,66. De la sorte, l'interrupteur de puissance 281,291 d'un tel contacteur 28,29 ne peut être fermé que lorsque l'interrupteur de puissance 381,391 de l'autre contacteur 38,39 relié à la même génératrice-démarreur 61,62 est ouvert interdisant de la sorte qu'un contacteur 28,29 relié à une génératrice-démarreur 61,62 soit fermé alors qu'un autre contacteur 38,39 reliés à une même génératrice-démarreur 61,62 est déjà fermé.

Par ailleurs, le circuit de commande 388,398 alimentant un contacteur 38,39 destiné à relier respectivement un second réseau secondaire 3,3' à une génératrice-démarreur 61,62 afin de l'alimenter pour le démarrage d'un moteur thermique 65,66 est relié d'une part aux bornes alimentant le bobinage 382,392 de ce contacteur 38,39, d'autre part aux bornes d'un second contact auxiliaire 284,294 d'un contacteur 28,29 destiné à relier respectivement un premier réseau secondaire 2,2' à la même génératrice-démarreur 61,62 en mode génératrice ainsi qu'aux bornes d'un autre second contact auxiliaire 384,394 d'un contacteur 38,39 destiné à relier respectivement un second réseau secondaire 3,3' à une autre génératrice-démarreur 61,62 afin de l'alimenter pour le démarrage d'un autre moteur thermique 65,66.

De la sorte, l'interrupteur de puissance 381,391 d'un tel contacteur 38,39 ne peut être fermé que lorsque l'interrupteur de puissance 281,291 de l'autre contacteur 28,29 relié à la même génératrice-démarreur 61,62 est ouvert et lorsque l'interrupteur de puissance 381,391 d'un autre contacteur 38,39 relié à une autre génératrice-démarreur 61,62 est ouvert interdisant de la sorte d'une part que les deux contacteurs 28,29,38,39 reliés à une même génératrice-démarreur 61,62 soient fermés simultanément et d'autre part que deux contacteurs 38,39 reliés à deux génératrices-démarreurs 61,62 distinctes soient fermés simultanément évitant ainsi d'alimenter simultanément ces deux génératrices-démarreurs 61,62 et, par suite, évitant le démarrage simultané de deux moteurs thermiques 65,66.

## Revendications

1. Architecture électrique (8) à double réseau secondaire pour aéronef comportant :
- un réseau électrique primaire (1) susceptibles de délivrer un courant électrique avec une tension électrique primaire,
- deux réseaux électriques secondaires (2,3) susceptibles de délivrer respectivement un courant électrique secondaire avec une tension électrique secondaire (US1,US2), ladite tension électrique secondaire (US1,US2) étant différente de ladite tension électrique primaire,
- un ou plusieurs composants électriques (61-64), et
- au moins une source électrique (27,37) reliée à au moins un réseau électrique secondaire (2,3),
**caractérisée en ce que**, un composant électrique commun (61,62) étant relié électriquement uniquement auxdits deux réseaux électriques secondaires (2,3), chaque réseau électrique secondaire (2,3) comporte un contacteur (28,38) permettant de relier électriquement chaque réseau électrique secondaire (2,3) avec ledit composant électrique commun (61,62), lesdits contacteurs (28,38) étant liés entre eux de sorte qu'un contacteur (28,38) ne peut pas être fermé tant que l'autre contacteur (28,38) n'est pas ouvert afin que ledit composant électrique commun (61,62) ne puisse pas être lié électriquement simultanément auxdits deux réseaux secondaires (2,3).

2. Architecture électrique (8) selon la revendication 1,
**caractérisée en ce qu'**un premier réseau électrique secondaire (2) délivre un courant électrique secondaire avec une première tension électrique secondaire (US1) strictement inférieure à une deuxième tension électrique secondaire (US2) d'un deuxième courant électrique secondaire délivré par un deuxième réseau électrique secondaire (3) et ladite architecture électrique (8) comporte au moins deux sources électriques (27,37), une première source électrique (27) étant agencée sur ledit premier réseau électrique secondaire (3) et fournissant ladite première tension électrique secondaire (US1) audit premier réseau électrique secondaire (2), une deuxième source électrique (37) étant agencée entre ledit premier réseau électrique secondaire (2) et ledit deuxième réseau électrique secondaire (3) et fournissant une tension électrique égale à la différence entre ladite deuxième tension électrique secondaire (US2) et ladite première tension électrique secondaire (US1), de sorte que lesdites deux sources électriques (27,37) fonctionnent en série et fournissent conjointement ladite deuxième tension électrique secondaire (US2) audit deuxième réseau électrique secondaire (3).

3. Architecture électrique (8) selon l'une quelconque des revendications 1 à 2,
**caractérisée en ce qu'**un composant électrique commun (61) est une génératrice-démarreur (61) reliée auxdits deux réseaux électriques secondaires (2,3) et ladite génératrice-démarreur (61) est alimentée par un réseau électrique secondaire (3) afin de démarrer un moteur thermique (65), ladite génératrice-démarreur (61) étant une source électrique de l'autre réseau électrique secondaire (2) en fonction générateur.

4. Architecture électrique (8) selon l'une quelconque des revendications 1 à 3,
**caractérisée en ce que** ladite architecture électrique (8) comporte un réseau électrique primaire (1) et un transformateur-redresseur (5) interconnecté entre ledit réseau électrique primaire (1) et lesdits réseaux électriques secondaires (2,3).

5. Architecture électrique (8) selon la revendication 4,
**caractérisée en ce que** ledit transformateur-redresseur (5) comporte :
- des enroulements primaires triphasés (10) reliés audit réseau électrique primaire (1),
- deux ensembles secondaires (40,50) munis respectivement de deux groupes d'enroulements secondaires triphasés (41,42,51,52) et d'un pont redresseur (48,58) agencé entre lesdits deux groupes d'enroulements secondaires triphasés (41,42,51,52) et un réseau électrique secondaire (2,3),
lesdits ensembles secondaires (40,50) étant reliés électriquement en série de sorte que ladite première tension électrique secondaire (US1) d'un premier réseau électrique secondaire (2) est la tension électrique aux bornes d'un premier ensemble secondaire (40) et ladite deuxième tension électrique secondaires (US2) d'un deuxième réseau électrique secondaire (3) est la tension électrique aux bornes desdits deux ensembles secondaires (40,50).

6. Architecture électrique (8) selon la revendication 4,
**caractérisée en ce que** ledit transformateur-redresseur (5) comporte :
- des enroulements primaires triphasés (10) reliés audit réseau électrique primaire (1),
- deux ensembles secondaires (40,50) munis respectivement de deux groupes d'enroulements secondaires triphasés (41,42,51,52) et d'un pont redresseur (48,58) agencé entre lesdits deux groupes d'enroulements secondaires triphasés (41,42,51,52) et un réseau électrique secondaire (2,3),
lesdits ensembles secondaires (40,50) n'étant pas reliés électriquement en série de sorte que ladite première tension électrique secondaire (US1) d'un premier réseau électrique secondaire (2) est la tension électrique aux bornes d'un premier ensemble secondaire (40) et ladite deuxième tension électrique secondaire (US2) d'un deuxième réseau électrique secondaire (3) est la tension électrique aux bornes d'un deuxième ensemble secondaire (50).

7. Architecture électrique (8) selon l'une quelconque des revendications 4 à 6,
**caractérisée en ce que** ledit réseau électrique primaire (1) est un réseau électrique à basse tension et lesdits réseaux électriques secondaires (2,3) sont des réseaux électriques à très basse tension, ladite basse tension étant comprise entre 120 Volts (120V) et 1500V pour un courant électrique continu et entre 50V et 1000V pour un courant électrique alternatif alors que ladite très basse tension est inférieure ou égale à 120V pour un courant électrique continu et inférieure ou égale à 50V pour un courant électrique alternatif.

8. Architecture électrique (8) selon la revendication 7,
**caractérisée en ce que** ladite architecture électrique (8) comporte un réseau électrique primaire (1) délivrant un courant électrique alternatif triphasé de tension électrique primaire de valeur nominale égale à 115V et deux réseaux électriques secondaires (2,3) délivrant des courants électriques continus de tensions électriques secondaires respectivement de valeurs nominales égales à 28V et 56V.

9. Architecture électrique (8) selon l'une quelconque des revendications 1 à 8,
**caractérisée en ce que** qu'une source électrique (17,27,27',37,37') est un moyen de stockage d'énergie électrique rechargeable, un moyen de stockage d'énergie électrique non rechargeable, une génératrice-démarreur (61,62) entrainée par un moteur thermique (65,66) ou bien un générateur entraîné mécaniquement par une boîte de transmission principale de puissance mécanique (60), un groupe de puissance auxiliaire ou un groupe de fourniture d'électricité au sol.

10. Architecture électrique (8) selon l'une quelconque des revendications 1 à 9,
**caractérisée en ce que** ladite architecture électrique (8) comporte au moins un réseau secondaire supplémentaire.

11. Architecture électrique (8) selon l'une quelconque des revendications 1 à 10,
**caractérisée en ce que** lesdits contacteurs (28,38) sont liés entre eux par des liaisons électriques.

12. Architecture électrique (8) selon la revendication 11,
**caractérisée en ce que** chaque contacteur (28,38) comporte un interrupteur de puissance (281,381), quatre contacts auxiliaires (283,383,284,384,285,385,286,386) et un bobinage (282,382), ledit interrupteur de puissance (281,381) permettant d'ouvrir et de fermer une liaison électrique entre ledit composant électrique commun (61,62) et un réseau électrique secondaire (2,3), lesdits contacts auxiliaires (283,383,284,384,285,385,286,386) fournissant une information de l'état dudit interrupteur de puissance (281,381).

13. Procédé de gestion d'une architecture électrique à double réseau secondaire pour le démarrage d'un moteur thermique (65,66) d'un aéronef, ladite architecture électrique (8) à double réseau secondaire comportant :
- un réseau électrique primaire (1) susceptibles de délivrer un courant électrique avec une tension électrique primaire,
- deux réseaux électriques secondaires (2,3), susceptibles de délivrer respectivement un courant électrique secondaire avec une tension électrique secondaire (US1,US2), ladite tension électrique secondaire (US1,US2) étant différente de ladite tension électrique primaire,
- un ou plusieurs composants électriques (61-64) dont au moins un composant électrique commun (61,62) est relié électriquement uniquement aux réseaux électriques secondaires (2,3),
- au moins une source électrique (17,27,37) reliée à au moins un réseau électrique secondaire (2,3), et
- au moins deux contacteurs (28,38) agencés respectivement sur un réseau électrique secondaire (2,3), chaque contacteur (28,38) permettant de relier électriquement un réseau électrique secondaire (2,3) avec un composant électrique commun (61,62), lesdits contacteurs (28,38) étant liés entre eux de sorte qu'un contacteur (28,38) ne peut pas être fermé tant que l'autre contacteur (28,38) n'est pas ouvert afin que ledit composant électrique commun (61,62) ne puisse pas être lié électriquement simultanément auxdits deux réseaux secondaires (2,3),
**caractérisé en ce que** ledit procédé comporte les étapes suivantes :
- une première étape d'alimentation électrique d'un deuxième réseau électrique secondaire (3),
- une deuxième étape de contrôle de l'ouverture d'un premier contacteur (28) agencé sur un premier réseau électrique secondaire (2),
- une troisième étape de fermeture d'un deuxième contacteur (38) agencé sur ledit deuxième réseau électrique secondaire (3),
- une quatrième étape d'alimentation électrique dudit composant commun (61) par ledit deuxième réseau électrique secondaire (3),
- une cinquième étape d'ouverture dudit deuxième contacteur (38),
- une sixième étape de fermeture dudit premier contacteur (28), et
- une septième étape de liaison électrique dudit composant commun (61) avec ledit premier réseau électrique secondaire (2).

14. Procédé selon la revendication 13,
**caractérisé en ce que** ladite deuxième étape de contrôle de l'ouverture d'un premier contacteur (28,38) interdit l'exécution de ladite troisième étape de fermeture d'un deuxième contacteur tant que ledit premier contacteur (28) n'est pas ouvert afin d'éviter que lesdits deux contacteurs (28,38) soient fermés simultanément.

15. Procédé selon l'une quelconque des revendications 13 à 14,
**caractérisé en ce que**, ledit composant commun (61,62) étant une génératrice-démarreur liée à un moteur thermique (65,66), ladite quatrième étape d'alimentation est une étape de démarrage dudit moteur thermique (65,66) et ladite septième étape de liaison électrique est une étape de génération d'un courant électrique pour le premier réseau électrique secondaire (2).

## Patentansprüche

1. Elektrische Architektur (8) mit dualem Sekundärstromkreis für ein Luftfahrzeug, umfassend:
- einen Primärstromkreis (1), der in der Lage ist, einen elektrischen Strom mit einer primären elektrischen Spannung zu liefern,
- zwei Sekundärstromkreise (2, 3), die in der Lage sind, jeweils einen sekundären elektrischen Strom mit einer sekundären elektrischen Spannung (US2, US1) zu liefern, wobei sich die sekundäre elektrische Spannung (US1, US2) von der primären elektrischen Spannung unterscheidet,
- eine oder mehrere elektrische Komponenten (61-64) und
- mindestens eine elektrische Quelle (27, 37), die mit mindestens einem Sekundärstromkreis (2, 3) verbunden ist,
**dadurch gekennzeichnet, dass** eine gemeinsame elektrische Komponente (61, 62) nur mit den beiden Sekundärstromkreisen (2, 3) elektrisch verbunden ist, dass jeder Sekundärstromkreis (2, 3) ein Schütz (28, 38) zum elektrischen Verbinden jedes Sekundärstromkreises (2, 3) mit der gemeinsamen elektrischen Komponente (61, 62) aufweist, wobei die Schütze (28, 38) so miteinander verbunden sind, dass ein Schütz (28, 38) erst geschlossen werden kann, wenn das andere Schütz (28, 38) geöffnet ist, so dass das gemeinsame elektrische Bauteil (61, 62) nicht gleichzeitig mit den beiden Sekundärstromkreisen (2, 3) elektrisch verbunden sein kann.

2. Elektrische Architektur (8) nach Anspruch 1,
**dadurch gekennzeichnet, dass** ein erster Sekundärstromkreis (2) einen sekundären elektrischen Strom mit einer ersten sekundären elektrischen Spannung (US1) liefert, die strikt niedriger ist als eine zweite sekundäre elektrische Spannung (US2) eines zweiten sekundären elektrischen Stroms, der von einem zweiten Sekundärstromkreis (3) geliefert wird, und dass die elektrische Architektur (8) mindestens zwei elektrische Quellen (27, 37) umfasst, wobei eine erste elektrische Quelle (27) auf dem ersten Sekundärstromkreis (3) angeordnet ist und die erste sekundäre elektrische Spannung (US1) an den ersten Sekundärstromkreis (2) liefert, eine zweite elektrische Quelle (37) zwischen dem ersten Sekundärstromkreis (2) und dem zweiten Sekundärstromkreis (3) angeordnet ist und eine elektrische Spannung bereitstellt, die der Differenz zwischen der zweiten sekundären elektrischen Spannung (US2) und der ersten sekundären elektrischen Spannung (US1) entspricht, so dass die beiden elektrischen Quellen (27, 37) in Reihe arbeiten und gemeinsam die zweite sekundäre elektrische Spannung (US2) dem zweiten Sekundärstromkreis (3) zuführen.

3. Elektrische Architektur (8) nach einem der Ansprüche 1 bis 2,
**dadurch gekennzeichnet, dass** eine gemeinsame elektrische Komponente (61) ein Starter-Generator (61) ist, der mit den beiden Sekundärstromkreisen (2, 3) verbunden ist, und der Starter-Generator (61) von einem Sekundärstromkreis (3) versorgt wird, um einen Verbrennungsmotor (65) zu starten, wobei der Starter-Generator (61) eine elektrische Quelle des anderen Sekundärstromkreises (2) in Generatorfunktion ist.

4. Elektrische Architektur (8) nach einem der Ansprüche 1 bis 3,
**dadurch gekennzeichnet, dass** die elektrische Architektur (8) einen Primärstromkreis (1) und einen Gleichrichtertransformator (5) umfasst, der zwischen dem Primärstromkreis (1) und den Sekundärstromkreisen (2, 3) verbunden ist.

5. Elektrische Architektur (8) nach Anspruch 4, **dadurch gekennzeichnet, dass** der Transformator-Gleichrichter (5) umfasst:
- dreiphasige Primärwicklungen (10), die mit dem Primärstromkreis (1) verbunden sind,
- zwei sekundäre Baugruppen (40, 50), die jeweils mit zwei dreiphasigen sekundären Wicklungsgruppen (41, 42, 51, 52) und einer Gleichrichterbrücke (48, 58) versehen sind, die zwischen den beiden dreiphasigen Wicklungsgruppen (41, 42, 51, 52) und einem Sekundärstromkreis (2, 3) angeordnet sind,
wobei die sekundären Baugruppen (40, 50) elektrisch in Reihe geschaltet sind, so dass die erste sekundäre elektrische Spannung (US1) eines ersten Sekundärstromkreises (2) die elektrische Spannung über einer ersten sekundären Baugruppe (40) ist und die zweite sekundäre elektrische Spannung (US2) eines zweiten Sekundärstromkreises (3) die elektrische Spannung über den beiden sekundären Baugruppen (40, 50) ist.

6. Elektrische Architektur (8) nach Anspruch 4, **dadurch gekennzeichnet, dass** der Transformator-Gleichrichter (5) umfasst:
- dreiphasige Primärwicklungen (10), die mit dem Primärstromkreis (1) verbunden sind,
- zwei sekundäre Baugruppen (40, 50), die jeweils mit zwei dreiphasigen sekundären Wicklungsgruppen (41, 42, 51, 52) und einer Gleichrichterbrücke (48, 58) versehen sind, die zwischen den beiden dreiphasigen sekundären Wicklungsgruppen (41, 42, 51, 52) und einem Sekundärstromkreis (2, 3) angeordnet sind,
wobei die sekundären Baugruppen (40, 50) nicht elektrisch in Reihe geschaltet sind, so dass die erste sekundäre elektrische Spannung (US1) eines ersten Sekundärstromkreises (2) die elektrische Spannung über einer ersten sekundären Baugruppe (40) ist und die zweite sekundäre elektrische Spannung (US2) eines zweiten Sekundärstromkreises (3) die elektrische Spannung über einer zweiten sekundären Baugruppe (50) ist.

7. Elektrische Architektur (8) nach einem der Ansprüche 4 bis 6,
**dadurch gekennzeichnet, dass** der Primärstromkreis (1) ein elektrisches Niederspannungsnetz ist und die Sekundärstromkreise (2, 3) elektrische Niedrigstspannungsnetze sind, wobei die Niederspannung zwischen 120 Volt (120V) und 1500V für einen elektrischen Gleichstrom und zwischen 50V und 1000V für einen elektrischen Wechselstrom liegt, während die Niedrigstspannung weniger als oder gleich 120V für einen elektrischen Gleichstrom und weniger als oder gleich 50V für einen elektrischen Wechselstrom ist.

8. Elektrische Architektur (8) nach Anspruch 7,
**dadurch gekennzeichnet, dass** die elektrische Architektur (8) einen Primärstromkreis (1), der einen dreiphasigen Wechselstrom mit einer primären elektrischen Spannung von 115V Nennwert liefert, und zwei Sekundärstromkreise (2, 3) umfasst, die elektrische Gleichströme mit sekundären elektrischen Spannungen mit Nennwerten von 28V und 56V liefern.

9. Elektrische Architektur (8) nach einem der Ansprüche 1 bis 8,
**dadurch gekennzeichnet, dass** eine elektrische Quelle (17, 27, 27', 37, 37') ein wiederaufladbares elektrisches Energiespeichermittel, ein nicht wiederaufladbares elektrisches Energiespeichermittel, ein von einem Verbrennungsmotor (65, 66) angetriebener Starter-Generator (61, 62) oder ein von einem mechanischen Hauptleistungsgetriebe (60), einer Hilfsenergiegruppe oder einer Bodenstromversorgungsgruppe mechanisch angetriebener Generator ist.

10. Elektrische Architektur (8) nach einem der Ansprüche 1 bis 9,
**dadurch gekennzeichnet, dass** die elektrische Architektur (8) mindestens einen zusätzlichen Sekundärstromkreis umfasst.

11. Elektrische Architektur (8) nach einem der Ansprüche 1 bis 10,
**dadurch gekennzeichnet, dass** die Schütze (28, 38) durch elektrische Verbindungen miteinander verbunden sind.

12. Elektrische Architektur (8) nach Anspruch 11,
**dadurch gekennzeichnet, dass** jedes Schütz (28, 38) einen Leistungsschalter (281, 381), vier Hilfskontakte (283, 383, 284, 384, 285, 385, 286, 386) und eine Wicklung (282, 382) aufweist, wobei der Leistungsschalter (281,381) es erlaubt, eine elektrischen Verbindung zwischen der gemeinsamen elektrischen Komponente (61, 62) und einem Sekundärstromkreis (2, 3) zu öffnen und zu schließen, wobei die Hilfskontakte (283, 383, 284, 384, 285, 385, 286, 386) Informationen über den Zustand des Leistungsschalters (281, 381) bereitstellen.

13. Verfahren zum Verwalten einer elektrischen Architektur mit doppeltem Sekundärstromkreis zum Starten eines Verbrennungsmotors (65, 66) eines Luftfahrzeugs, wobei die elektrische Architektur (8) mit doppeltem Sekundärstromkreis umfasst:
- einen Primärstromkreis (1), der in der Lage ist, einen elektrischen Strom mit einer primären elektrischen Spannung zu liefern,
- zwei Sekundärstromkreise (2, 3), die in der Lage sind, jeweils einen sekundären elektrischen Strom mit einer sekundären elektrischen Spannung (US2, US1) zu liefern, wobei sich die sekundäre elektrische Spannung (US1, US2) von der primären elektrischen Spannung unterscheidet,
- eine oder mehrere elektrische Komponenten (61-64), von denen mindestens eine gemeinsame elektrische Komponente (61, 62) nur mit den Sekundärstromkreisen (2, 3) elektrisch verbunden ist,
- mindestens eine elektrische Quelle (27, 37), die mit mindestens einem Sekundärstromkreis (2, 3) verbunden ist,
- mindestens zwei jeweils an einem Sekundärstromkreis (2, 3) angeordneten Schützen (28, 38), wobei jedes Schütz (28, 38) es erlaubt, einen Sekundärstromkreis (2, 3) mit der gemeinsamen elektrischen Komponente (61, 62) zu verbinden, wobei die Schütze (28, 38) so miteinander verbunden sind, dass ein Schütz (28, 38) erst geschlossen werden kann, wenn das andere Schütz (28, 38) geöffnet ist, so dass das gemeinsame elektrische Bauteil (61, 62) nicht gleichzeitig mit den beiden Sekundärstromkreisen (2, 3) elektrisch verbunden sein kann,
**dadurch gekennzeichnet, dass** das Verfahren die folgenden Schritte umfasst:
- einen ersten Schritt des Versorgens eines zweiten Sekundärstromkreises (3),
- einen zweiten Schritt des Steuern des Öffnens eines ersten Schützes (28), das in einem ersten Sekundärstromkreis (2) angeordnet ist,
- einen dritten Schritt des Schließens eines zweiten Schützes (38), das in dem zweiten Sekundärstromkreis (3) angeordnet ist,
- einen vierten Schritt des Versorgens der gemeinsamen Komponente (61) mit Strom durch den zweiten Sekundärstromkreis (3),
- einen fünften Schritt des Öffnens des zweiten Schützes (38),
- einen sechsten Schritt des Schließens des ersten Schützes (28), und
- einen siebten Schritt des elektrischen Verbindens der gemeinsamen Komponente (61) mit dem ersten Sekundärstromkreis (2).

14. Verfahren nach Anspruch 13, **dadurch gekennzeichnet, dass** der zweite Schritt zum Steuern des Öffnens eines ersten Schützes (28, 38) die Ausführung des dritten Schrittes des Schließens eines zweiten Schützes sperrt, solange das erste Schütz (28) nicht offen ist, um zu verhindern, dass das zwei Schütze (28, 38) gleichzeitig geschlossen sind.

15. Verfahren nach einem der Ansprüche 13 bis 14,
**dadurch gekennzeichnet, dass** die gemeinsame Komponente (61, 62) ein Starter-Generator ist, der mit einem Verbrennungsmotor (65, 66) verbunden ist, dass der vierte Schritt des Versorgens ein Schritt des Startens des Verbrennungsmotors (65, 66) ist und der siebte Schritt des elektrischen Verbindens ein Schritt des Erzeugens eines elektrischen Stroms für den ersten Sekundärstromkreis (2) ist.

## Claims

1. Electrical architecture (8) having two secondary networks for an aircraft, which architecture comprises:
- a primary electrical network (1) capable of supplying an electric current at a primary electric voltage,
- two secondary electrical networks (2, 3) each capable of supplying a secondary electric current at a secondary electric voltage (US1, US2), said secondary electric voltage (US1, US2) being different from said primary electric voltage,
- one or more electrical components (61-64), and
- at least one source of electricity (27, 37) connected to at least one secondary electrical network (2, 3),
**characterised in that**, a common electrical component (61, 62) being electrically connected only to said two secondary electrical networks (2, 3), each secondary electrical network (2, 3) comprises a contact switch (28, 38) for electrically connecting each secondary electrical network (2, 3) to said common electrical component (61, 62), said contact switches (28, 38) being interconnected such that one contact switch (28, 38) cannot be closed so long as the other contact switch (28, 38) is not open so that said common electrical component (61, 62) cannot be electrically connected simultaneously to said two secondary networks (2, 3).

2. Electrical architecture (8) according to claim 1, **characterised in that** a first secondary electrical network (2) supplies a secondary electric current at a first secondary electric voltage (US1) that is strictly less than a second secondary electric voltage (US2) of a second secondary electric current supplied by a second secondary electrical network (3), and said electrical architecture (8) comprises at least two sources of electricity (27, 37), a first source of electricity (27) being arranged on said first secondary electrical network (3) and providing said first secondary electric voltage (US1) to said first secondary electrical network (2), a second source of electricity (37) being arranged between said first secondary electrical network (2) and said second secondary electrical network (3) and providing an electric voltage that is equal to the difference between said second secondary electric voltage (US2) and said first secondary electric voltage (US1) such that said two sources of electricity (27, 37) operate in series and jointly provide said second secondary electric voltage (US2) to said second secondary electrical network (3).

3. Electrical architecture (8) according to either claim 1 or claim 2, **characterised in that** a common electrical component (61) is a starter generator (61) connected to said two secondary electrical networks (2, 3), and said starter generator (61) is powered by a secondary electrical network (3) in order to start up a combustion engine (65), said starter generator (61), when operating as a generator, being a source of electricity of the other secondary electrical network (2).

4. Electrical architecture (8) according to any of claims 1 to 3, **characterised in that** said electrical architecture (8) comprises a primary electrical network (1) and a transformer-rectifier (5) interconnected between said primary electrical network (1) and said secondary electrical networks (2, 3).

5. Electrical architecture (8) according to claim 4, **characterised in that** said transformer-rectifier (5) comprises:
- three-phase primary windings (10) connected to said primary electrical network (1),
- two secondary assemblies (40, 50) each provided with two groups of three-phase secondary windings (41, 42, 51, 52) and a bridge rectifier (48, 58) arranged between said two groups of three-phase secondary windings (41, 42, 51, 52) and a secondary electrical network (2, 3),
said secondary assemblies (40, 50) being electrically connected in series such that said first secondary electric voltage (US1) of a first secondary electrical network (2) is the electric voltage across the terminals of a first secondary assembly (40) and said second secondary electric voltage (US2) of a second secondary electrical network (3) is the electric voltage across the terminals of said two secondary assemblies (40, 50).

6. Electrical architecture (8) according to claim 4, **characterised in that** said transformer-rectifier (5) comprises:
- three-phase primary windings (10) connected to said primary electrical network (1),
- two secondary assemblies (40, 50) each provided with two groups of three-phase secondary windings (41, 42, 51, 52) and a bridge rectifier (48, 58) arranged between said two groups of three-phase secondary windings (41, 42, 51, 52) and a secondary electrical network (2, 3),
said secondary assemblies (40, 50) not being electrically connected in series such that said first secondary electric voltage (US1) of a first secondary electrical network (2) is the electric voltage across the terminals of a first secondary assembly (40) and said second secondary electric voltage (US2) of a second secondary electrical network (3) is the electric voltage across the terminals of a second secondary assembly (50).

7. Electrical architecture (8) according to any of claims 4 to 6, **characterised in that** said primary electrical network (1) is a low voltage electrical network and said secondary electrical networks (2, 3) are very low voltage electrical networks, said low voltage being between 120 volts (120 V) and 1500 V for a direct electric current and between 50 V and 1000 V for an alternating electric current, whereas said very low voltage is less than or equal to 120 V for a direct electric current and less than or equal to 50 V for an alternating electric current.

8. Electrical architecture (8) according to claim 7, **characterised in that** said electrical architecture (8) comprises a primary electrical network (1) which supplies a three-phase alternating electric current at a primary electric voltage of a nominal value equal to 115 V, and two secondary electrical networks (2, 3) which supply direct electric currents at secondary electric voltages of nominal values equal to 28 V and 56 V, respectively.

9. Electrical architecture (8) according to any of claims 1 to 8, **characterised in that** a source of electricity (17, 27, 27', 37, 37') is a rechargeable means for storing electrical energy, a non-rechargeable means for storing electrical energy, a starter generator (61, 62) driven by a combustion engine (65, 66) or a generator mechanically driven by a main mechanical power transmission gearbox (60), an auxiliary power unit or a ground power unit.

10. Electrical architecture (8) according to any of claims 1 to 9, **characterised in that** said electrical architecture (8) comprises at least one additional secondary network.

11. Electrical architecture (8) according to any of claims 1 to 10, **characterised in that** said contact switches (28, 38) are interconnected by electrical connections.

12. Electrical architecture (8) according to claim 11, **characterised in that** each contact switch (28, 38) comprises a power switch (281, 381), four auxiliary contacts (283, 383, 284, 384, 285, 385, 286, 386) and a coil (282, 382), said power switch (281, 381) making it possible to open and close an electrical connection between said common electrical component (61, 62) and a secondary electrical network (2, 3), said auxiliary contacts (283, 383, 284, 384, 285, 385, 286, 386) providing information on the state of said power switch (281, 381).

13. Method for managing an electrical architecture having two secondary networks for starting up a combustion engine (65, 66) of an aircraft, said electrical architecture (8) having two secondary networks comprising:
- a primary electrical network (1) capable of supplying an electric current at a primary electric voltage,
- two secondary electrical networks (2, 3) each capable of supplying a secondary electric current at a secondary electric voltage (US1, US2), said secondary electric voltage (US1, US2) being different from said primary electric voltage,
- one or more electrical components (61-64), of which at least one common electrical component (61, 62) is electrically connected only to the secondary electrical networks (2, 3),
- at least one source of electricity (17, 27, 37) connected to at least one secondary electrical network (2, 3), and
- at least two contact switches (28, 38) each arranged on a secondary electrical network (2, 3), each contact switch (28, 38) making it possible to electrically connect one secondary electrical network (2, 3) to a common electrical component (61, 62), said contact switches (28, 38) being interconnected such that one contact switch (28, 38) cannot be closed so long as the other contact switch (28, 38) is not open so that said common electrical component (61, 62) cannot be electrically connected simultaneously to said two secondary networks (2, 3),
**characterised in that** said method comprises the following steps:
- a first step of electrically powering a second secondary electrical network (3),
- a second step of controlling the opening of a first contact switch (28) arranged on a first secondary electrical network (2),
- a third step of closing a second contact switch (38) arranged on said second secondary electrical network (3),
- a fourth step of electrically powering said common component (61) by said second secondary electrical network (3),
- a fifth step of opening said second contact switch (38),
- a sixth step of closing said first contact switch (28), and
- a seventh step of electrically connecting said common component (61) to said first secondary electrical network (2).

14. Method according to claim 13, **characterised in that** said second step of controlling the opening of a first contact switch (28, 38) prevents said third step of closing a second contact switch from being carried out so long as said first contact switch (28) is not open, in order to prevent said two contact switches (28, 38) from being closed simultaneously.

15. Method according to either claim 13 or claim 14, **characterised in that**, said common component (61, 62) being a starter generator connected to a combustion engine (65, 66), said fourth powering step is a step of starting up said combustion engine (65, 66) and said seventh electrical connection step is a step of generating an electric current for the first secondary electrical network (2).
